# FASCICULE DE BREVET EUROPEEN

(11) **EP 3 837 886 B1**
(45) Date de publication et mention de la délivrance du brevet: **18.10.2023**
(21) Numéro de dépôt: 19759666.1
(22) Date de dépôt: 05.08.2019
(51) Int. Cl.: H04W 36/08, H04W 92/20

(54) **HANDOVER DANS UN SYSTÈME D'ACCES IAB**
HANDOVER IN EINEM IAB ZUGAGSSYSTEM
HANDOVER IN A IAB ACCESS SYSTEM

(30) Priorité: 16.08.2018 FR 1857510
(43) Date de publication de la demande: 23.06.2021
(73) Titulaire: Orange, 92130 Issy-les-Moulineaux (FR)
(72) Inventeur: LIN, Hao, 92326 CHÂTILLON CEDEX (FR)
(86) Numéro de dépôt international: PCT/FR2019/051903
(87) Numéro de publication internationale: WO 2020/035645

(56) Documents cités:
- WO-A1-2013/091678
- WO-A2-2008/114180
- US-A1- 2017 055 187
- ZTE: "Discussion on IAB node access procedure", 3GPP DRAFT; R2-1807401-DISCUSSION ON IAB NODE ACCESS PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Busan, Korea; 20180521 - 20180525 20 mai 2018 (2018-05-20), XP051443798, Extrait de l'Internet: URL:http://www.3gpp.org/ftp/Meetings%5F3GP P%5FSYNC/RAN2/Docs/ [extrait le 2018-05-20]
- "3rd Generation Partnership Project; Technical Specification Group Radio Access Network; Study on Integrated Access and Backhaul; (Release 15)", 3GPP STANDARD; TECHNICAL REPORT; 3GPP TR 38.874, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V0.4.0, 9 août 2018 (2018-08-09), pages 1-55, XP051475113,
- ZTE: "Discussion on IAB topology adaptation", 3GPP DRAFT; R3-183688 - DISCUSSION ON IAB TOPOLOGY ADAPTATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Montreal, Canada; 20180702 - 20180706 1 juillet 2018 (2018-07-01), XP051467976, Extrait de l'Internet: URL:http://www.3gpp.org/ftp/Meetings%5F3GP P%5FSYNC/RAN3/Docs [extrait le 2018-07-01]

## Description

### Domaine de l'invention

Le domaine de l'invention est celui des communications cellulaires. Plus précisément, l'invention concerne un procédé et une station de base d' accès au canal de transmission d'un réseau d'accès dont les noeuds sont connectés par une liaison filaire à un réseau coeur soit directement pour un seul des noeuds soit via des liaisons non filaires entre les noeuds jusqu'à ce seul noeud.

### Art antérieur

Le réseau d'accès d'un système de télécommunication comprend des noeuds dits stations de base dans un contexte de communications cellulaires.

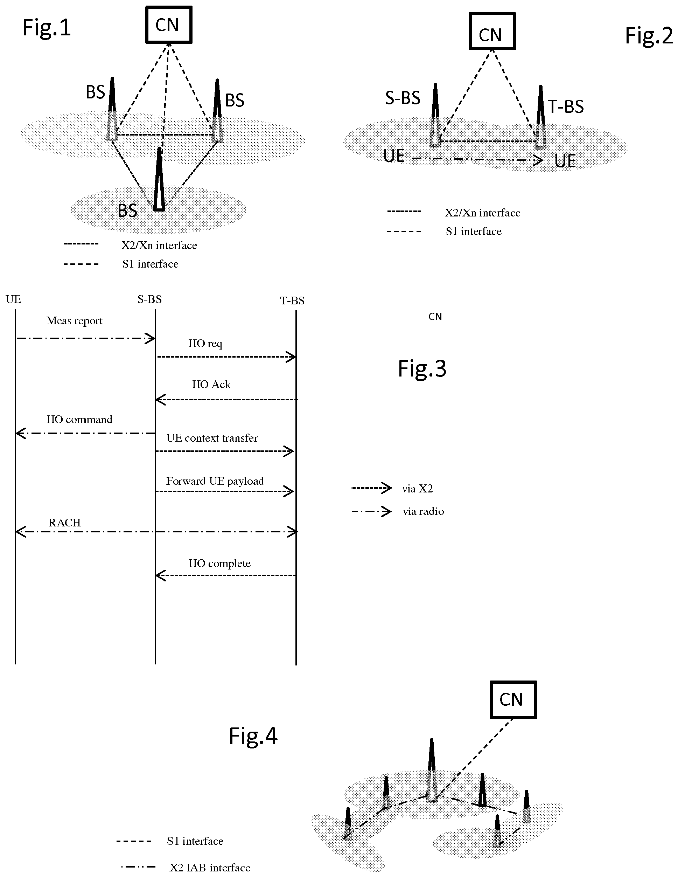

Les spécifications du système LTE-Advanced éditées par le 3GPP précisent l'architecture d'interconnexion entre les stations de base du réseau d'accès et le réseau coeur dite ossature d'interconnexions (backhaul). La figure 1 illustre de manière schématique cette architecture. Selon le schéma, les stations de base BS sont interconnectées entre elles via une interface dit X2 de type filaire et chaque station de base BS est connectée au réseau coeur CN via une interface dite S1 de type filaire.

Le document ZTE : « Discussion on IAB node access procedure », 3GPP Draft ; R2-1807401- 20mai 2018 traite de la sélection d'un noeud IAB.

Différents scénarios de communications entre deux terminaux avec déplacement d'un ou des deux terminaux définissent les exigences à respecter par le réseau d'accès pour assurer la continuité des communications malgré la mobilité des terminaux.

Pour assurer cette continuité un des mécanismes spécifié est le mécanisme de basculement dit handover.

En référence à la figure 2, un mécanisme de handover repose sur l'échange de messages entre la station de base à laquelle est attachée le terminal UE, dite station de base source S-BS, et la station de base à laquelle le terminal UE doit s'attacher dite station de hase cible T-BS.

Les messages échangés sont illustrés par la figure 3 en référence à un mécanisme connu de handover spécifié par exemple pour un système LTE Advanced du 3GPP dans les versions 10 (release 10) et suivantes.

La station de hase source S-BS décide de déclencher un mécanisme de hand-over sur la base de mesures que lui remonte, Meas report, le terminal UE. Les critères de décision sont relatifs à la qualité et/ou au niveau de signal radio des cellules voisines mesurés par le terminal UE.

Le déclenchement se traduit par l'envoi par la station de base source S-BS d'un message de requête, HO req, à la station de base cible T-BS via l'interface X2. Cette requête consiste essentiellement à interroger la station de base cible T-BS sur la possibilité de réaliser le handover.

La station de base cible T-BS vérifie les ressources disponibles pour transmettre et recevoir les données du terminal UE en cas de handover effectif du terminal UE.

Si la station de base cible T-BS accepte le handover, elle répond à la station de base source S-BS par un message d'accord, HO Ack. Ce message d'accord doit comprendre des informations nécessaires à la mise en oeuvre du hand-over : par exemple la configuration des canaux logiques et de transport, et en particulier l'identification de la ressource temps-fréquence pour un accès aléatoire (canal RACH), une nouvelle valeur d'identité C-RNTI, un identifiant de sécurité, éventuellement un préambule dédié.

A réception de ce message d'accord, HO Ack, la station de base source S-BS déclenche une commande de handover, HO command, à destination du terminal UE. Cette commande est typiquement un message RRC, via la voie radio, qui informe (identifiant C-RNTI, ressource temps-fréquence, préambule, etc) le terminal UE de la station de base cible T-BS.

En parallèle, la station de base source S-BS transfère à la station de base cible T-BS via l'interface X2 des informations de contexte de connexion du terminal UE, UE context transfer, qui comprennent des informations spécifiques (information de sécurité, etc) au terminal relatives à des couches hautes (selon le modèle OSI) pour que la station de base cible puisse recevoir des données provenant du réseau coeur et destinées au terminal. La station de base source S-BS transfère à la station de base cible T-BS via l'interface X2 des données spécifiques du terminal UE, Forward UE payload, que la station de base source S-BS ne lui a pas encore transmise.

Dès que le terminal UE reçoit la commande de handover, HO command, il démarre une procédure d'accès aléatoire à la station de base cible T-BS sur le canal RACH. L'accès au canal RACH peut-être effectué avec le préambule dédié s'il a été fourni. A l'issue de ce procédé, le terminal UE est attaché à la station de base cible T-BS qui devient alors la station de base source S-BS si un nouveau hand-over doit ultérieurement intervenir. Lorsque le terminal UE est attaché à la station de base cible T-BS, cette dernière informe la station de base source S-BS de la fin du procédé de handover, HO complete.

Compte tenu de la multiplication des offres de contenus multimedia et des applications pour y accéder, les besoins en bande passante et débit pour le réseau d'accès restent croissants.

Au sein de l'organisme de normalisation 3GPP, des travaux sont en cours pour permettre le déploiement de scénarios avec des exigences en termes de débit, de bande passante que ne peuvent garantir le système dit LTE-Advanced.

Une architecture envisagée au sein du 3GPP comprend une ossature d'interconnexions avec des liens sans fil (wireless backhaul) entre les noeuds pour répondre aux besoins de certains scénarios en assurant une flexibilité et en permettant un déploiement dense de cellules sans la nécessité d'une densification proportionnelle des interconnexions. Le système correspondant est dit IAB.

Ainsi, dans les systèmes IAB seul un noeud dit noeud donateur est directement connecté au réseau coeur CN via l'interface S1 (wired interface). Les interconnexions entre les noeuds sont basées sur une transmission radio via une interface sans fil dite X2 IAB (wireless interface) comme illustré par la figure 4.

Lors du déplacement d'un terminal UE dans un système IAB, une procédure de handover doit pouvoir être mise en oeuvre pour assurer la continuité d'une communication du terminal UE établie via le système IAB.

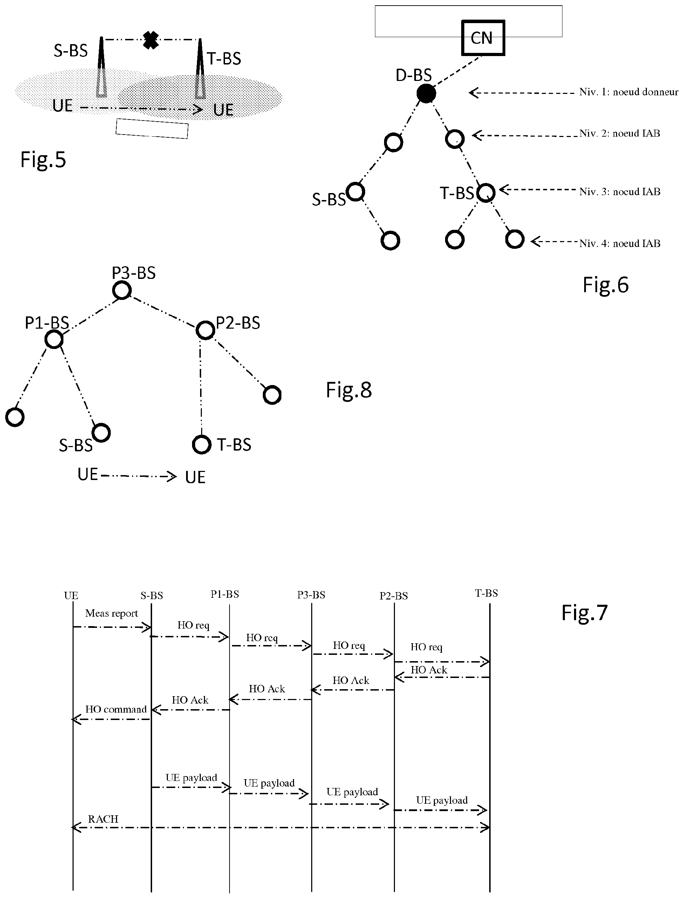

En fonction de la localisation des noeuds IAB et de la configuration de l'ossature d'interconnexions sans fil du système IAB, la station de base source S-BS et la station de base cible T-BS peuvent ne pas être interconnectées par un lien directe sans fil. La figure 5 est un schéma illustrant une telle configuration où la station de base source S-BS et la station de base cible T-BS ne sont pas interconnectées par un lien directe sans fil.

La figure 6 est une représentation schématique selon une structure en arbre d'un système IAB. Le noeud donneur D-BS est le seul connecté par une connexion filaire au réseau coeur CN. Ce noeud donneur est connecté par une connexion directe sans fil à des noeuds qui sont dits ses noeuds enfants de niveau 2, le noeud donneur définit le niveau 1 et est le noeud parent de ces noeuds de niveau 2. Chacun des noeuds de niveau 2 est lui-même le noeud parent de noeuds de niveau 3 qui lui sont connectés directement par une liaison sans fil, et ainsi de suite. A chaque niveau, un noeud, autre que le noeud donneur, a un noeud parent et un ou plusieurs noeuds enfants sauf les noeuds de niveau le plus bas dits de bordure, de niveau 4 selon l'exemple, qui n'ont qu'un noeud parent et pas de noeud enfant. La représentation d'un lien entre deux noeuds enfants signifie que chacun de ces deux noeuds est dans la couverture radio de l'interface X2 de l'autre. L'absence de lien représenté entre deux noeuds enfants signifie que chacun de ces deux noeuds est hors couverture radio de l'interface X2 de l'autre ce qui est le cas pour les noeuds S-BS et T-BS qui correspondent aux noeuds de la figure 5.

Par conséquent, lorsque le procédé de handover doit être mis en oeuvre entre deux noeuds dont chacun est hors couverture radio de l'interface X2 de l'autre, les messages ne peuvent pas être échangés directement entre ces deux noeuds via leur interface X2 IAB. Les messages de handover transmis par un des noeuds doivent remonter jusqu'à un premier noeud parent commun dans la structure en arbre avant de pouvoir redescendre jusqu'à l'autre noeud. Selon l'exemple illustré par la figure 6, le premier noeud parent commun est le noeud donneur D-BS.

Un tel chemin allonge de manière significative la latence du procédé de handover.

La figure 7 reprend les messages de hand-over de la figure 3 dans le cas d'une configuration du système IAB illustré par les figures 5 et 8. La transmission des informations de contexte de connexion du terminal UE, UE context transfer, de la station de base source S-BS à la station de base cible T-BS via l'interface X2 n'apparaît plus sur la figure 7. En effet, selon le mécanisme connu illustré par les figures 2 et 3 les stations de base source S-BS et cible T-BS sont chacune connectée via leur interface S1 au réseau coeur CN. Après le handover, le réseau coeur CN délivre les données destinées au terminal UE selon un chemin qui emprunte toujours une interface S1 mais cette interface est différente de celle d'avant le handover. Par conséquent, la station de base source S-BS doit transférer le contexte de connexion du terminal UE à la station de base cible T-BS via l'interface X2.

Dans le cas d'une configuration d'un système IAB, le handover intervient entre deux noeuds qui sont dans la dépendance d'un seul noeud donneur puisque ce dernier est unique. Par conséquent, du point de vue du réseau coeur CN ceci signifie que les données destinées au terminal sont transmises selon un chemin qui emprunte toujours la même interface S1. Ainsi, il n'y a plus besoin de transférer les informations de contexte de connexion du terminal UE de la station de base source S-BS à la station de base cible T-BS.

La figure 8 est une représentation schématique selon une structure en arbre d'un système IAB avec identification de seulement les liens sans fil entre les noeuds, le réseau coeur n'étant pas représenté. Le système IAB illustré comprend des noeuds sans liaison sans fil directe, noeuds dits de bordure. Un terminal UE est connecté à une station de base source S-BS. Ce terminal UE est mobile et en mouvement. Selon les mesures radio qu'il remonte à sa station de base source S-BS une des stations du système IAB est identifiée comme station de base cible T-BS. Selon cet exemple, le premier noeud parent commun de la station de base source S-BS et de la station de base cible T-BS est le noeud P3-BS. En effet, le noeud P1-BS est le premier noeud parent de la station de base source S-BS, le noeud P2-BS est le premier noeud parent de la station de base cible T-BS mais ces noeuds P1-BS et P2-BS sont différents. Ces deux noeuds P1-BS et P2-BS ont par contre le même noeud parent P3-BS.

La comparaison des figures 3 et 7 permet de constater que le chemin des messages ne s'effectue plus directement entre les stations S-BS et T-BS mais s'effectue par sauts multiples entre les noeuds S-BS et P1-BS, entre les noeuds P1-BS et P3-BS, entre les noeuds P3-BS et P2-BS et entre les noeuds P2-BS et T-BS. Ces sauts multiples allongent significativement le chemin des messages et par conséquent la latence du procédé de handover.

### Exposé de l'invention

L'invention se place dans le contexte d'un système d'accès IAB. Un système d'accès IAB comprend une ossature d'interconnexions telle qu'une seule liaison d'interconnexion est de type filaire, les autres interconnexions étant de type sans fil. La liaison filaire connecte une seule des stations de base du réseau d'accès au réseau coeur, cette station est dite noeud donneur. Toutes les autres interconnexions sont entre les stations de base du réseau d'accès et sont basées sur des liaisons sans fil.

L'invention propose un procédé de handover entre des stations de base d'un système d'accès IAB à un réseau coeur qui ne présente pas l'inconvénient de l'art antérieur.

Le procédé de handover comprend :
- une émission par une station de base dite source du système d'accès à laquelle est attaché un terminal d'une requête de handover à destination d'une station de base dite cible du système d'accès, la requête comprenant un identifiant des respectivement stations de base source et cible et un identifiant du terminal.

Les stations de base source et cible étant interconnectées via au moins une station de base dite noeud décideur différente du noeud donneur, le procédé comprend en outre :
- une interception de la requête de handover par le noeud décideur,
- une émission par le noeud décideur d'un message déterminé d'accord à destination de la station de base source,
- une émission d'un message de déclenchement d'un handover à destination de la station de base cible.

L'invention repose sur l'identification de stations de base dites décideurs dans la topologie d'interconnexions qui peuvent prendre la décision de handover en lieu et place de la station de base cible et en amont de celle-ci dans la topologie ce qui conduit à une réduction du nombre de sauts multiples constituant le chemin parcouru par les messages de handover.

Ainsi, pour une paire de stations de base source et cible qui ne sont pas directement interconnectées, dites stations de bordure, il y a une identification dans la topologie d'une station de base parente commune à ces deux stations de base source et cible. La suppression de sauts multiples du chemin des messages de handover réduit avantageusement la latence du procédé de handover.

Selon un mode de réalisation particulier, le procédé comprend en outre une identification par le noeud décideur du message d'accord déterminé en interrogeant une liste de messages d'accord à partir de l'identifiant de la station de base cible contenu dans la requête de handover.

Selon un mode de réalisation particulier, le noeud décideur transfère à la station de base cible des données provenant du réseau coeur, destinées au terminal et non encore transmises à la station de base source.

Lorsque la décision de handover est prise i.e l'accord est transmis à la station de base source, le noeud donneur mémorise temporairement les données provenant du réseau coeur via le noeud donneur et destinées au terminal. Après avoir émis le message de déclenchement d'un handover à destination de la station de base cible, le noeud donneur transfère à la station de base cible les données temporairement mémorisées.

L'invention a en outre pour objet une station de base dite noeud décideur destinée à un système d'accès à un réseau coeur comprenant une ossature d'interconnexions selon une structure d'arbre comprenant des liaisons sans fil et une seule liaison filaire, la liaison filaire connectant une seule des stations de base du système d'accès au réseau coeur, cette station étant dite noeud donneur, les interconnexions entre les stations de base du système d'accès étant uniquement basées sur des liaisons sans fil. Ce noeud décideur comprend :
- une interface de connexion sans fil pour recevoir et transmettre des messages transmis respectivement depuis et vers une autre station de base du système d'accès,
- une mémoire pour mémoriser la structure en arbre,
- une mémoire pour mémoriser une liste de messages d'accord déterminés identifiés respectivement avec des identifiants des stations de base,
- un processeur pour intercepter une requête de handover reçue sur l'interface de connexion sans fil, émise par une station de base dite source du système d'accès à laquelle est attaché un terminal à destination d'une station de base dite cible du système d'accès, la requête comprenant un identifiant des respectivement stations de base source et cible et un identifiant du terminal,
- un processeur pour piloter la mémoire pour émettre via l'interface de connexion sans fil un message déterminé d'accord à destination de la station de base source,
- un processeur pour piloter la mémoire pour émettre via l'interface de connexion sans fil un message de déclenchement d'un handover à destination de la station de base cible.

### Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- la figure 1, déjà commentée en relation avec l'art antérieur, est un schéma illustrant un système d'accès à un réseau coeur CN avec une ossature d'interconnexions filaires,
- la figure 2, déjà commentée en relation avec l'art antérieur, est un schéma illustrant un terminal UE en mouvement connecté via le système d'accès de la figure 1,
- la figure 3, déjà commentée en relation avec l'art antérieur, est un schéma des messages échangés pour le handover du terminal UE entre la station de base source S-BS et la station de base cible T-BS,
- la figure 4, déjà commentée en relation avec l'art antérieur, est un schéma illustrant un système d'accès IAB à un réseau coeur CN avec une ossature d'interconnexions sans fil et filaire,
- la figure 5, déjà commentée en relation avec l'art antérieur, est un schéma représentant un terminal UE en mouvement entre une station de base source S-BS et une station de base cible T-BS du système d'accès IAB de la figure 3, les deux stations source S-BS et cible T-BS n'étant pas directement interconnectées par une liaison sans fil,
- la figure 6, déjà commentée en relation avec l'art antérieur, est un schéma de la structure en arbre d'un système d'accès IAB avec identification du lien filaire entre le noeud donneur D-BS et le réseau coeur CN et des liens sans fil entre tous les noeuds,
- la figure 7, déjà commentée en relation avec l'art antérieur, est un schéma des messages échangés pour le handover du terminal UE entre la station de base source S-BS et la station de base cible T-BS du système IAB dont la structure en arbre est celle de la figure 8,
- la figure 8, déjà commentée en relation avec l'art antérieur, illustre la structure en arbre d'un système d'accès IAB avec identification uniquement des liens sans fil entre tous les noeuds et des stations de base source S-BS et cible T-BS d'un terminal UE en mouvement,
- la figure 9 est un schéma des messages échangés pour le handover du terminal UE entre la station de base source S-BS et la station de base cible T-BS du système IAB dont la structure en arbre est celle de la figure 8, selon l'invention,
- la figure 10 est le schéma de la figure 9 à laquelle a été rajoutée des croix signifiants la suppression de certains sauts,
- la figure 11 est un schéma d'une structure simplifiée d'une station de base décideur pour la mise en oeuvre de certaines étapes du procédé de handover selon l'invention.

### Description d'un mode de réalisation de l'invention

La structure en arbre d'un système IAB est illustrée par les figures 6 et 8 déjà décrites. Le système d'accès IAB comprend une ossature d'interconnexions selon une structure d'arbre constituée de liaisons sans fil et d'une seule liaison filaire. La liaison filaire connecte une seule des stations de base dite noeud donneur D-BS du système d'accès au réseau coeur. Les interconnexions entre les stations de base du système d'accès sont uniquement basées sur des liaisons sans fil.

Selon l'invention tous les noeuds du système d'accès IAB connaissent la topologie du système IAB i.e. ils connaissent la structure en arbre et l'identifiant de chacun des noeuds de cette structure. Selon l'invention, les noeuds de bordure sont identifiés et connus. Un noeud parent commun à des noeuds d'un ou plusieurs niveaux inférieurs qui ne sont pas directement interconnectés par une liaison sans fil (noeuds de bordure) peut jouer le rôle d'un noeud décideur. Tous les noeuds parents qui peuvent être des noeuds décideurs mémorisent ou ont accès à un espace mémoire où sont mémorisés des messages d'accord de handover chacun spécifique à une station de base cible i.e. correspondant à l'identifiant de la station de base cible.

Certaines ressources plus particulièrement des noeuds de bordure doivent être réservées à la mise en oeuvre du handover ; elles ne peuvent être utilisées à d'autre fin. Ces ressources comprennent des ressources temps-fréquence pour le canal RACH, éventuellement un préambule dédié pour l'accès au canal RACH et un identifiant C-RNTI. La topologie étant connue de chacun des noeuds, chaque noeud parent mémorise au moins les informations de contexte de connexion, UE context, des utilisateurs couverts par ses descendants de bordure i.e. station de base de bordure (l'utilisateur est dans la portée d'une station de bordure et est connecté à cette station).

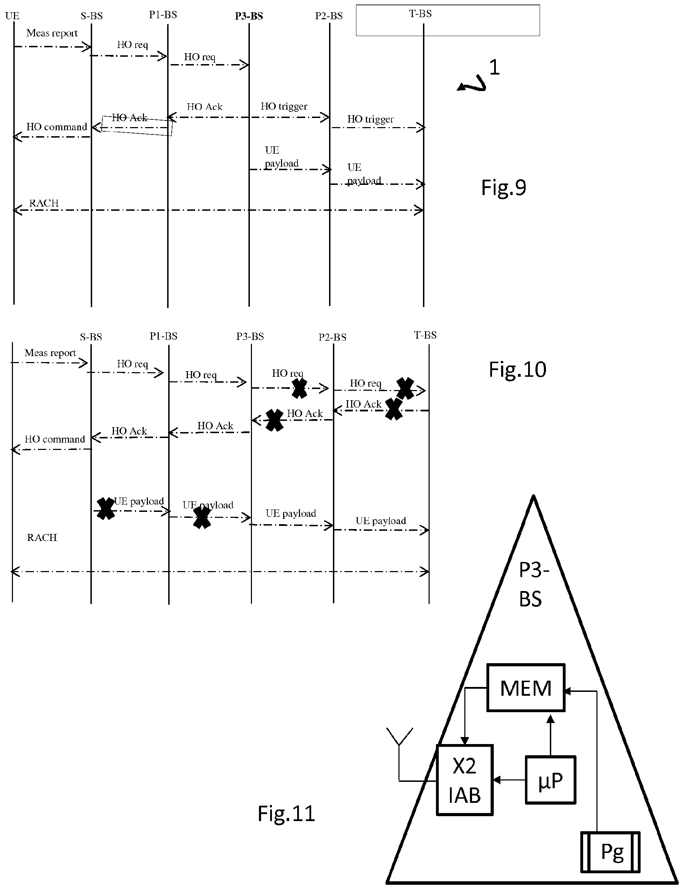

La figure 9 illustre un procédé de handover selon l'invention dans le contexte d'un système IAB illustré par la figure 8.

Le procédé 1 de handover selon l'invention se déroule entre des stations de base du système d'accès IAB. Le procédé comprend :
- une émission par une station de base dite source S-BS du système d'accès à laquelle est attaché un terminal UE d'une requête de handover, HO req, à destination d'une station de base dite cible T-BS du système d'accès.

De manière connue, cette requête est déclenchée en fonction de mesures, Meas report, remontées par le terminal UE.

La requête de handover, HO req, comprend un identifiant des respectivement stations de base source et cible et un identifiant du terminal.

Lorsque les stations de base source S-BS et cible T-BS ne sont pas directement interconnectées par une liaison sans fil mais sont interconnectées via au moins une station de base dite noeud décideur différente du noeud donneur, le procédé comprend :
- une interception de la requête de handover, HO req, par le noeud décideur P3-BS.

Dans la structure en arbre, le noeud décideur P3-BS est le premier noeud parent commun aux deux stations de base source et cible. Aucun ou au moins un niveau peut séparer le noeud décideur des stations de base source et cible. Le nombre de niveaux entre le noeud décideur et la station de base source peut être différent du nombre de niveaux entre le noeud décideur et la station de base cible. Un noeud parent de la station de base source qui n'est pas un noeud parent de la station de base cible transmet la requête de handover à un niveau supérieur i.e. vers le noeud décideur. A partir de la connaissance de la structure en arbre et de la connaissance de l'identifiant de la station de base cible contenu dans la requête de handover reçue, le noeud détermine s'il est le noeud décideur. S'il est le noeud décideur, il intercepte la requête de handover i.e. il ne la transmet pas vers aucun autre noeud. Ainsi, la requête est traitée par le noeud décideur P3-BS et il n'y a pas besoin d'attendre que cette requête soit transmise jusqu'à la station de base cible pour qu'elle soit acquittée.

Le procédé comprend en outre :
- une émission par le noeud décideur P3-BS d'un message d'accord, HO Ack, déterminé à destination de la station de base source S-BS.

Le noeud décideur P3-BS identifie le message d'accord déterminé en interrogeant la liste des messages d'accord à partir de l'identifiant de la station de base cible contenu dans la requête de handover, HO req.

Le procédé comprend en outre :
- une émission d'un message, HO trigger, de déclenchement d'un handover à destination de la station de base cible T-BS.

Ainsi, le noeud décideur P3-BS a décidé en place de la station de base cible T-BS sur le handover. La latence du procédé est au moins réduite de la suppression des sauts entre le noeud décideur et la station de base cible dans un sens pour la requête de handover et dans l'autre sens pour le message d'accord comme illustré par la figure 10. Les sauts supprimés sont identifiés par une croix.

Selon un mécanisme similaire au procédé de l'art antérieur, le noeud décideur suspend l'envoie des données vers le terminal UE et les mémorise temporairement dès qu'il a reçu la requête de handover. Après avoir émis le message de déclenchement du handover à destination de la station de base cible, le noeud décideur peut transmettre à la station de base cible les données, UE payload, temporairement mémorisées.

La structure simplifiée d'une station de base décideur participant à la mise en oeuvre d'un procédé de handover selon les modes de réalisation décrits ci-dessus est décrite ci-après et illustrée par la figure 11.

Une telle station de base P3-BS comprend une interface X2 IAB de connexion sans fil, une mémoire Mem comprenant une mémoire tampon, un processeur µP piloté par un programme d'ordinateur Pg mettant en oeuvre des étapes du procédé de handover selon l'invention.

La mémoire Mem mémorise la structure en arbre de la topologie du système d'accès IAB à laquelle est destinée la station de base P3-BS.

La mémoire Mem mémorise en outre une liste de messages d'accord déterminés identifiés respectivement avec des identifiants des stations de base du système d'accès IAB.

L'interface X2 IAB de connexion sans fil permet de recevoir des messages transmis depuis une autre station de base du système d'accès et de transmettre des messages vers une autre station de base du système d'accès.

A l'initialisation, les instructions de code du programme d'ordinateur Pg sont par exemple chargées dans la mémoire tampon avant d'être exécutées par le processeur µP.

Le processeur µP intercepte une requête de handover reçue sur l'interface de connexion sans fil X2 IAB. Cette requête est émise par une station de base dite source du système d'accès à laquelle est attaché un terminal et est destinée à une station de base dite cible du système d'accès. La requête comprend un identifiant des respectivement stations de base source et cible et un identifiant du terminal.

Le processeur µP met en oeuvre certaines des étapes du procédé de handover décrit précédemment, selon les instructions du programme d'ordinateur Pg.

A cette fin, le processeur µP pilote la mémoire Mem pour émettre via l'interface de connexion sans fil X2 IAB un message déterminé d'accord à destination de la station de base source. Le processeur µP pilote en outre la mémoire Mem pour émettre via l'interface de connexion sans fil X2 IAB un message de déclenchement d'un handover à destination de la station de base cible.

## Revendications

1. Procédé (1) de handover entre des stations de base dites noeuds, identifiés par un identifiant, d'un système d'accès IAB à un réseau coeur (CN), le système d'accès comprenant une ossature d'interconnexions selon une structure d'arbre comprenant des liaisons sans fil et une seule liaison filaire, la liaison filaire connectant une seule des stations de base du système d'accès au réseau coeur, cette station étant dite noeud donneur (D-BS), les interconnexions entre les stations de base du système d'accès étant uniquement basées sur des liaisons sans fil, la structure en arbre et l'identifiant des nœuds de cette structure définissant une topologie du système d'accès, chaque nœud connaissant la topologie, le procédé comprend :
- une émission par une station de base dite source (S-BS) du système d'accès à laquelle est attaché un terminal (UE) d'une requête de handover (HO req) à destination d'une station de base dite cible (T-BS) du système d'accès, la requête comprenant un identifiant des respectivement stations de base source et cible et un identifiant du terminal,
les stations de base source et cible étant interconnectées via au moins une station de base dite noeud décideur (P3-BS) différente du noeud donneur, ladite station de base comprenant une interface (X2 IAB) de connexion sans fil pour recevoir et transmettre des messages transmis respectivement depuis et vers une autre station de base du système d'accès, le procédé est **caractérisé en ce qu'**il comprend les étapes accomplies Vf q ladite interface (X2 IAB) de connexion sans fil:
- une interception de la requête de handover (HO req) par le noeud décideur,
- une émission par le noeud décideur (P3-BS) d'un message (HO Ack) déterminé d'accord à destination de la station de base source,
- une émission d'un message (HO trigger) de déclenchement d'un handover à destination de la station de base cible.

2. Procédé (1) de handover selon la revendication précédente comprenant une identification par le noeud décideur (P3-BS) du message (HO Ack) d'accord déterminé en interrogeant une liste de messages d'accord à partir de l'identifiant de la station (T-BS) de base cible contenu dans la requête de handover.

3. Procédé (1) de handover selon la revendication 1 ou 2 selon lequel le nœud décideur (P3-BS) transfère à la station de base cible des données (UE payload) provenant du réseau cœur (CN), destinées au terminal (UE) et non encore transmises à la station de base source (S-BS).

4. Station de base (P3-BS) dite noeud décideur, destinée à un système d'accès à un réseau coeur (CN), ce système d'accès IAB comprenant des stations de base dites noeuds identifiés par un identifiant et comprenant une ossature d'interconnexions selon une structure d'arbre comprenant des liaisons sans fil et une seule liaison filaire, la liaison filaire connectant une seule des stations de base du système d' accès au réseau coeur, cette station étant dite noeud donneur (D-BS), les interconnexions entre les stations de base du système d'accès étant uniquement basées sur des liaisons sans fil, la structure en arbre et l'identifiant des nœuds de cette structure définissant une topologie du système d'accès, chaque nœud connaissant la topologie, la station de base comprenant:
- une interface (X2 IAB) de connexion sans fil pour recevoir et transmettre des messages transmis respectivement depuis et vers une autre station de base du système d'accès,
- une mémoire (MEM) pour mémoriser la structure en arbre,
- une mémoire (MEM) pour mémoriser une liste de messages (HO Ack) d'accord déterminés identifiés respectivement avec les identifiants des stations de base,
- un processeur (µP) : caractérisé:
- pour intercepter une requête (HO req) de handover reçue sur l'interface (X2 IAB) de connexion sans fil, émise par une station de base dite source (S-BS) du système d'accès à laquelle est attaché un terminal (UE) à destination d'une station de base dite cible (T-BS) du système d'accès, la requête comprenant un identifiant des respectivement stations de base source et cible et un identifiant du terminal,
- pour piloter la mémoire (MEM) pour émettre via l'interface (X2 IAB) de connexion sans fil un message (HO Ack) déterminé d'accord à destination de la station de base source et
- pour piloter la mémoire (MEM) pour émettre via l'interface (X2 IAB) de connexion sans fil un message (HO trigger) de déclenchement d'un handover à destination de la station de base cible.

## Patentansprüche

1. Handover-Verfahren (1), zwischen durch eine Kennung identifizierten, Knoten genannten Basisstationen eines TAB-Zugangssystems zu einem Kernnetz (CN), wobei das Zugangssystem eine Konstruktion von Zusammenschaltungen gemäß einer Baumstruktur enthält, die drahtlose Verbindungen und eine einzige Drahtverbindung enthält, wobei die Drahtverbindung eine einzige der Basisstationen des Zugangssystems mit dem Kernnetz verbindet, wobei diese Station Geberknoten (D-BS) genannt wird, wobei die Zusammenschaltungen zwischen den Basisstationen des Zugangssystems nur auf drahtlosen Verbindungen basieren, wobei die Baumstruktur und die Kennung der Knoten dieser Struktur eine Topologie des Zugangssystems definieren, wobei jeder Knoten die Topologie kennt, wobei das Verfahren enthält:
- Senden, durch eine Quelle genannte Basisstation (S-BS) des Zugangssystems, mit der ein Endgerät (UE) verbunden ist, einer Handover-Anforderung (HO req) an eine Ziel genannte Basisstation (T-BS) des Zugangssystems, wobei die Anforderung eine Kennung der Quelle- bzw. Ziel-Basisstationen und eine Kennung des Endgeräts enthält,
wobei die Quelle- und Ziel-Basisstationen über mindestens eine Entscheidungsknoten genannte Basisstation (P3-BS) anders als der Geberknoten zusammengeschaltet sind, wobei die Basisstation eine drahtlose Verbindungsschnittstelle (X2 IAB) enthält, um von und zu einer anderen Basisstation des Zugangssystems übertragene Nachrichten zu empfangen und zu übertragen,
das Verfahren ist **dadurch gekennzeichnet, dass** es die mittels der drahtlosen Verbindungsschnittstelle (X2 IAB) ausgeführten Schritte enthält:
- Abfangen der Handover-Anforderung (HO req) durch den Entscheidungsknoten,
- Senden einer bestimmten Zustimmungsnachricht (HO Ack) durch den Entscheidungsknoten (P3-BS) an die Quelle-Basisstation,
- Senden einer Auslösenachricht (HO trigger) eines Handovers an die Ziel-Basisstation.

2. Handover-Verfahren (1) nach dem vorhergehenden Anspruch, das eine Identifizierung der bestimmten Zustimmungsnachricht (HO Ack) durch den Entscheidungsknoten (P3-BS) durch Abfragen einer Liste von Zustimmungsnachrichten ausgehend von der in der Handover-Anforderung enthaltenen Kennung der Ziel-Basisstation (T-BS) enthält.

3. Handover-Verfahren (1) nach Anspruch 1 oder 2, wobei der Entscheidungsknoten (P3-BS) vom Kernnetz (CN) kommende Daten (UE payload) an die Ziel-Basisstation überträgt, die für das Endgerät (UE) bestimmt sind und noch nicht an die Quelle-Basisstation (S-BS) übertragen wurden.

4. Basisstation (P3-BS), Entscheidungsknoten genannt, die für ein Zugangssystem zu einem Kernnetz (CN) bestimmt ist, wobei dieses IAB-Zugangssystem durch eine Kennung identifizierte, Knoten genannte Basisstationen enthält und eine Konstruktion von Zusammenschaltungen gemäß einer Baumstruktur enthält, die drahtlose Verbindungen und eine einzige Drahtverbindung enthält, wobei die Drahtverbindung eine einzige der Basisstationen des Zugangssystems mit dem Kernnetz verbindet, wobei diese Station Geberknoten (D-BS) genannt wird, wobei die Zusammenschaltungen zwischen den Basisstationen des Zugangssystems nur auf drahtlosen Verbindungen basieren, wobei die Baumstruktur und die Kennung der Knoten dieser Struktur eine Topologie des Zugangssystems definieren, wobei jeder Knoten die Topologie kennt, wobei die Basisstation enthält:
- eine drahtlose Verbindungsschnittstelle (X2 IAB), um von und zu einer anderen Basisstation des Zugangssystems übertragene Nachrichten zu empfangen und zu übertragen,
- einen Speicher (MEM), um die Baumstruktur zu speichern,
- einen Speicher (MEM), um eine Liste von bestimmten Zustimmungsnachrichten (HO Ack) zu speichern, die je mit den Kennungen der Basisstationen identifiziert werden,
- einen Prozessor (µP); gekennzeichnet:
- um eine Handover-Anforderung (HO req) abzufangen, die auf der drahtlosen Verbindungsschnittstelle (X2 IAB) empfangen wird, gesendet von einer Quelle genannten Basisstation (S-BS) des Zugangssystems, mit der ein Endgerät (UE) verbunden ist, an eine Ziel genannte Basisstation (T-BS) des Zugangssystems, wobei die Anforderung eine Kennung der Quelle- bzw. Ziel-Basisstationen und eine Kennung des Endgeräts enthält,
- um den Speicher (MEM) zu steuern, um über die drahtlose Verbindungsschnittstelle (X2 IAB) eine bestimmte Zustimmungsnachricht (HO Ack) an die Quelle-Basisstation zu senden, und
- um den Speicher (MEM) zu steuern, um über die drahtlose Verbindungsschnittstelle (X2 IAB) eine Auslösenachricht (HO trigger) eines Handovers an die Ziel-Basisstation zu senden.

## Claims

1. Handover method (1) between base stations, called nodes, identified by an identifier, of an IAB access system to a core network (CN), the access system comprising an interconnection backbone in a tree structure comprising wireless links and a single wired link, the wired link connecting a single one of the base stations of the access system to the core network, this station being called a donor node (D-BS), the interconnections between the base stations of the access system being based solely on wireless links, the tree structure and the identifier of the nodes of this structure defining a topology of the access system, each node knowing the topology, the method comprising:
- a base station, called source base station (S-BS), of the access system, to which a terminal (UE) is attached, sending a handover request (HO req) to a base station, called target base station (T-BS), of the access system, the request comprising an identifier, respectively, of the source and target base stations and an identifier of the terminal,
the source and target base stations being interconnected via at least one base station called a decider node (P3-BS), different from the donor node, said base station comprising a wireless connection interface (X2 IAB) for receiving and transmitting messages transmitted respectively from and to another base station of the access system, the method being **characterized in that** it comprises the following steps accomplished via said wireless connection interface (X2 IAB):
- interception of the handover request (HO req) by the decider node,
- the decider node (P3-BS) sending a determined agreement message to the source base station,
- sending of a message (HO trigger) for triggering a handover, to the target base station.

2. Handover method (1) according to the preceding claim, comprising the decider node (P3-BS) identifying the determined agreement message (HO Ack) by interrogating a list of agreement messages based on the identifier of the target base station (T-BS) contained in the handover request.

3. Handover method (1) according to Claim 1 or 2, wherein the decider node (P3-BS) transfers, to the target base station, data (UE payload) originating from the core network (CN), destined for the terminal (UE) and not yet transmitted to the source base station (S-BS).

4. Base station (P3-BS), called a decider node, intended for an access system to a core network (CN), this IAB access system comprising base stations, called nodes, identified by an identifier and comprising an interconnection backbone in a tree structure comprising wireless links and a single wired link, the wired link connecting a single one of the base stations of the access system to the core network, this station being called a donor node (D-BS), the interconnections between the base stations of the access system being based solely on wireless links, the tree structure and the identifier of the nodes of this structure defining a topology of the access system, each node knowing the topology, the base station comprising:
- a wireless connection interface (X2 IAB) for receiving and transmitting messages transmitted respectively from and to another base station of the access system,
- a memory (MEM) for storing the tree structure,
- a memory (MEM) for storing a list of determined agreement messages (HO Ack) identified respectively with the identifiers of the base stations,
- a processor (µP): characterized:
- to intercept a handover request (HO req) received on the wireless connection interface (X2 IAB), sent by a base station, called source base station (S-BS), of the access system, to which a terminal (UE) is attached, to a base station, called target base station (T-BS), of the access system, the request comprising an identifier, respectively, of the source and target base stations and an identifier of the terminal,
- to drive the memory (MEM) so as to send, via the wireless connection interface (X2 IAB), a determined agreement message (HO Ack) to the source base station and
- to drive the memory (MEM) so as to send, via the wireless connection interface (X2 IAB), a message (HO trigger) for triggering a handover, to the target base station.
